# EUROPEAN PATENT APPLICATION

(11) **EP 4 660 097 A1**
(43) Date of publication of application: **10.12.2025**
(21) Application number: 25178705.7
(22) Date of filing: 26.05.2025
(51) Int. Cl.: B65D 5/50, B65D 81/05

(54) **PACKING MEMBER**

(30) Priority: 04.06.2024 JP 2024090690
(71) Applicant: Kyocera Document Solutions Inc., Osaka-shi, Osaka 540-8585 (JP)
(72) Inventor: Takeuchi, Masakazu, Osaka, 540-8585 (JP)
(74) Representative: BRP Renaud & Partner mbB Rechtsanwälte Patentanwälte Steuerberater

(57) **Abstract**

A packing member (1) has a housing space (S) and includes a base portion (2), a pair of side wall portions (3), a pair of first shock-absorbing portions (4), and a pair of second shock-absorbing portions (5). The pair of side wall portions (3) are bent from the circumferential edge of the base portion (2) and are arranged to face each other across the housing space (S). The pair of first shock-absorbing portions (4) are bent from the circumferential edges of the pair of side wall portions (3) and extend outward. The pair of second shock-absorbing portions (5) are bent from the circumferential edges of the pair of first shock-absorbing portions (4) and extend substantially perpendicularly to the side wall portions (3) in a direction toward the base portion (2). The base portion (2) has a pair of through holes (21) arranged away from each other. The pair of second shock-absorbing portions (5) have a pair of projections (51) inserted in the pair of through holes (21).

## Description

### BACKGROUND

The present disclosure relates to a packing member.

Packing members formed by bending a single sheet material (blank) made of cardboard or the like into a predetermined three-dimensional shape are conventionally in wide use. These packing members have a shock-absorbing portion formed outside a housing space for housing the packed article.

### SUMMARY

An object of the present disclosure is to provide a packing member that can firmly maintain a three-dimensional shape owing to a configuration with reduced displacement of different parts.

According to one aspect of the present disclosure, a packing member is formed by bending a single sheet material so as to have a housing space, and has a base portion, a pair of side wall portions, a pair of first shock-absorbing portions, a pair of second shock-absorbing portions, and a third shock-absorbing portion. The base portion is in a rectangular shape. The pair of side wall portions are formed by being bent substantially perpendicularly from the circumferential edge of the base portion and are arranged to face each other along a first direction across the housing space. The pair of first shock-absorbing portions are formed by being bent substantially perpendicularly from the circumferential edges of the pair of side wall portions and extend outward of the side wall portions along the first direction. The pair of second shock-absorbing portions are formed by being bent substantially perpendicularly from the circumferential edges of the pair of first shock-absorbing portions and extend substantially perpendicularly to the side wall portions along the first direction and along a direction toward the base portion. The third shock-absorbing portion is connected between the pair of second shock-absorbing portions, are formed substantially in a V-shape as seen from a second direction facing the base portion, and are arranged adjacently outside the housing space with respect to the base portion. The base portion has a pair of through holes arranged away from each other along the first direction. The pair of second shock-absorbing portions have a pair of projections inserted in the pair of through holes.

### BRIEF DESCRIPTION OF THE DRAWINGS

Fig. 1 is a perspective view of a packing kit including a packing member according to one embodiment of the present disclosure.
Fig. 2 is a perspective view of the packing member in Fig. 1.
Fig. 3 is a developed view of the packing member in Fig. 2.
Fig. 4 is a perspective view of the packing member in Fig. 2 as seen from the housing space for a packed article.
Fig. 5 is a perspective view of the packing member in Fig. 2 as seen from an opening in a packing box.

### DETAILED DESCRIPTION

An embodiment of the present disclosure will be described below with reference to the accompanying drawings. It should be understood that the present disclosure is not limited by what is described below. In the following description, the direction indicated by arrowed line D1 in the diagrams is a "first direction," the direction indicated by arrowed line D2 is a "second direction," and the direction indicated by arrowed line D3 is a "third direction." The first, second, and third directions D1, D2, and D3 are orthogonal to each other. In the embodiment, with respect to a packed article Pr in the shape of a rectangular parallelepiped, the first direction D1 is the lateral direction of the packed article Pr, the second direction D2 is the top-bottom direction of the packed article Pr, and the third direction D3 is the longitudinal direction of the packed article Pr. A packing box Pb has an opening in the top face of the packing box Bp.

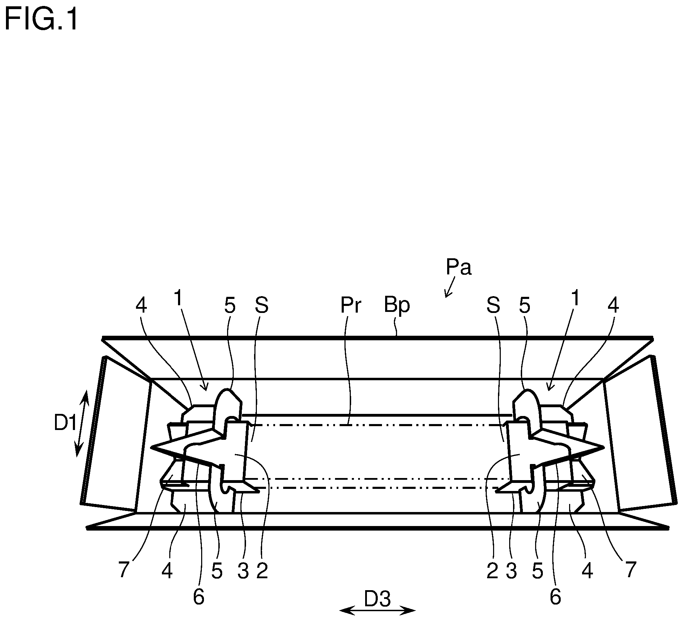

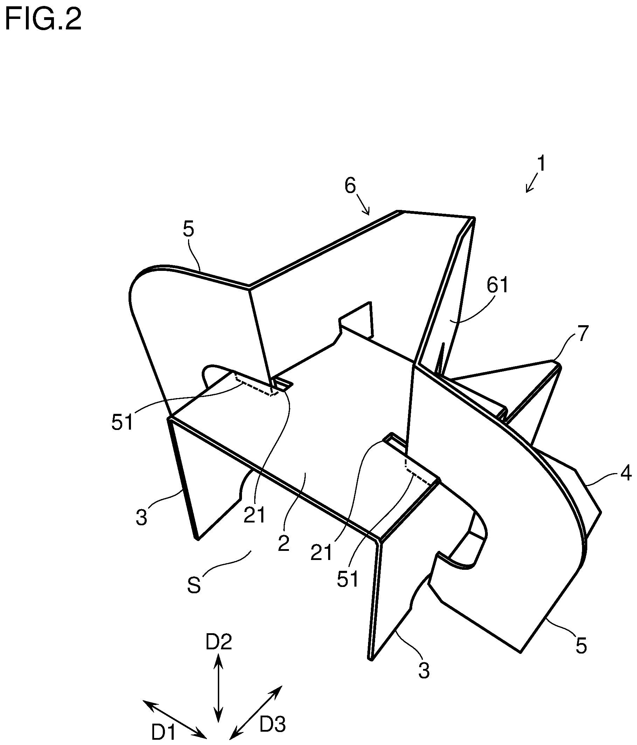

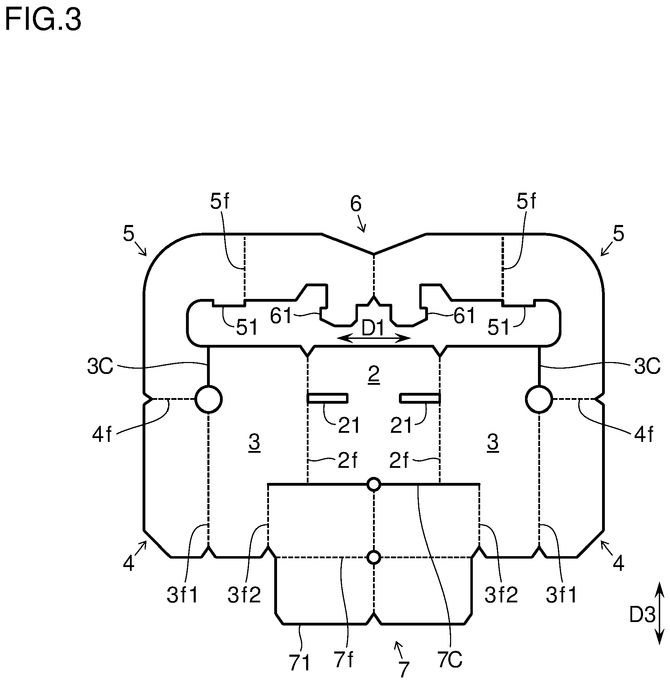

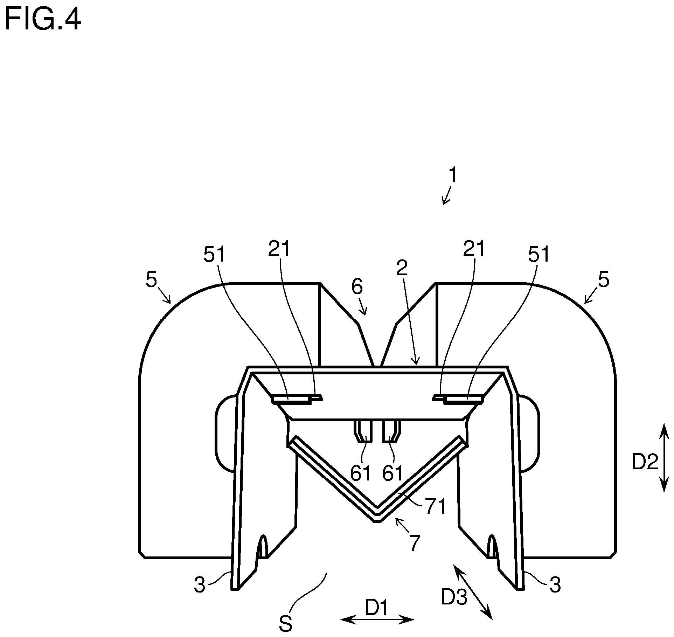

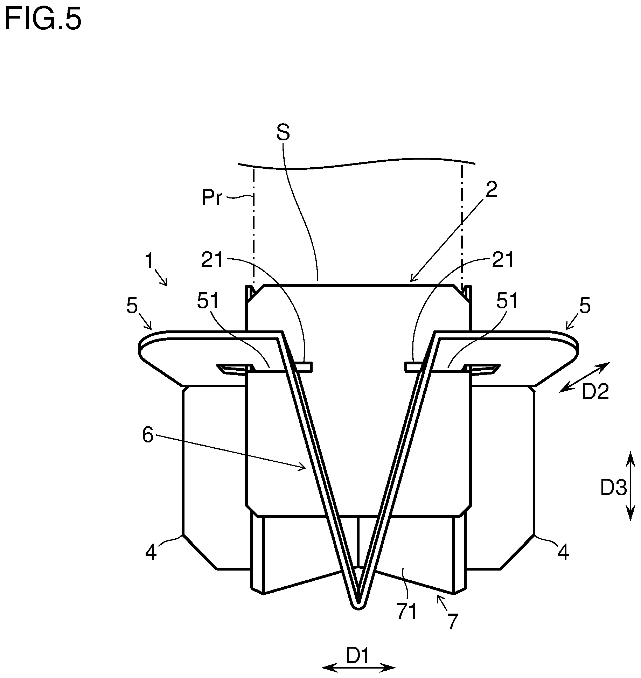

Fig. 1 is a perspective view of a packing kit Pa including a packing member 1 according to an embodiment. Fig. 2 is a perspective view of the packing member 1 in Fig. 1. Fig. 3 is a developed view of the packing member 1 in Fig. 2. Fig. 4 is a perspective view of the packing member 1 in Fig. 2 as seen from a housing space S for the packed article Pr. Fig. 5 is a perspective view of the packing member 1 in Fig. 2 as seen from the opening in the packing box Bp. Note that Fig. 1 is a perspective view of the packing kit Pa as seen from the opening (top face) in the packing box Bp. The packing kit Pa includes a packing box Bp and a packing member 1.

As shown in Figs. 1 and 2, the packing member 1 has a substantially rectangular parallelepiped outer shape. The packing member 1 has a part of it formed substantially in an inverted U-shape as seen from the third direction D3, and has a housing space S for the packed article Pr. The packing member 1 is housed inside the packing box Bp in a state arranged at each end part, in the longitudinal direction (third direction D3), of the packed article Pr, which is in an elongate rectangular parallelepiped shape.

Unfolded, the packing member 1 is as shown in the developed view in Fig. 3. In the unfolded, flat state, the packing member 1 is a single sheet material (blank) with a substantially rectangular outer shape, and is made of, for example, cardboard. That is, the packing member 1 is formed by bending a single sheet material.

The packing member 1 has a base portion 2, a pair of side wall portions 3, a pair of first shock-absorbing portions 4, a pair of second shock-absorbing portions 5, and a third shock-absorbing portion 6.

In the packing member 1 as a sheet material in a flat state, the base portion 2 is arranged substantially at the center and is rectangular as seen in a plan view. In the packing member 1 in the assembled state shown in Figs. 1 and 2, the base portion 2 is in the shape of a flat plate facing the top face (the face facing the opening in the packing box Bp) of the packed article Pr in a rectangular parallelepiped shape and extending along the first direction D1 (horizontal direction) and along the third direction D3 (the longitudinal direction of the packed article Pr).

In the packing member 1 as a sheet material in a flat state, the pair of side wall portions 3 are arranged outside the base portion 2 across it at opposite sides along the first direction D1. The pair of side wall portions 3 are each formed by being bent from the circumferential edge of the base portion 2 substantially perpendicularly to it. Specifically, the pair of side wall portions 3 are provided along the circumferential edge of the base portion 2, and are formed by being bent substantially perpendicularly downward along two fold lines 2f apart from each other along the first direction D1 across the base portion 2 and extending along the third direction D3.

The pair of side wall portions 3 are arranged opposite each other across the housing space S along the first direction D1. In the packing member 1 in the assembled state shown in Figs. 1 and 2, the pair of side wall portions 3 are each in the shape of a flat plate extending along the second direction D2 (top-bottom direction) and along the third direction D3 (the longitudinal direction of the packed article Pr).

In the packing member 1 as a sheet material in a flat state, the pair of first shock-absorbing portions 4 are arranged outside the pair of side wall portions 3 at opposite sides along a direction away from the base portion 2. The pair of first shock-absorbing portions 4 are respectively formed by being bent from the circumferential edges of the pair of side wall portions 3 substantially perpendicularly to them. Specifically, the pair of first shock-absorbing portions 4 are respectively provided along the circumferential edges of the pair of side wall portions 3, and are formed substantially perpendicularly in the horizontal direction along fold lines 3f1 extending along the third direction D3.

The pair of first shock-absorbing portions 4 are arranged to face the inner floor face of the packing box Bp. In the packing member 1 in the assembled state shown in Figs. 1 and 2, the pair of first shock-absorbing portions 4 are each in the shape of a flat plate extending along the first direction D1 (horizontal direction) and along the third direction D3 (the longitudinal direction of the packed article Pr) and rectangular as seen from the second direction D2 (top-bottom direction). The pair of first shock-absorbing portions 4 are downward away from the base portion 2 across the height of the side wall portions 3 (their dimension along the second direction D2 (top-bottom direction)) and are substantially parallel to the base portion 2.

The pair of first shock-absorbing portions 4 respectively extend to outside the pair of side wall portions 3 along the first direction D1. The tip edge of the flat-plate-shaped first shock-absorbing portion 4 along the first direction D1 adjacently faces a side inner face of the packing box Bp along the first direction D1, and thus the packing member 1 obtains from the pair of first shock-absorbing portions a shock-absorbing effect along the first direction D1 4.

In the packing member 1 as a sheet material in a flat state, the pair of second shock-absorbing portions 5 are connected to the pair of first shock-absorbing portions 4 across fold lines 4f extending in the direction orthogonal to the fold lines 3f1. The pair of second shock-absorbing portions 5 are respectively formed by being bent from the circumferential edges of the pair of first shock-absorbing portions 4 substantially perpendicularly to them. Specifically, the pair of second shock-absorbing portions 5 are respectively formed by being bent substantially perpendicularly upward along the fold lines 4f provided along the circumferential edges of the pair of first shock-absorbing portions 4.

In the packing member 1 as a sheet material, parts of the pair of second shock-absorbing portions 5 are adjacent to the pair of side wall portions 3. Along the boundaries between the pair of second shock-absorbing portions 5 and the pair of side wall portions 3, cut lines 3c are formed that extend rectilinearly along the extension lines of the fold lines 3f1 and that penetrate the sheet material in its thickness direction.

The pair of second shock-absorbing portions 5 are arranged to face an inner face of the packing box Bp at one end along the third direction D3 (the longitudinal direction of the packed article Pr). In the packing member 1 in the assembled state shown in Figs. 1 and 2, the pair of second shock-absorbing portions 5 are each in the shape of a flat plate extending along the first direction D1 and along the second direction D2 (top-bottom direction) and L-shaped as seen from the third direction D3.

The pair of second shock-absorbing portions 5 respectively extend perpendicularly to the side wall portions 3 along the first direction D1 and along the direction toward the base portion 2 (i.e., the second direction). The tip edges of the plate-shaped second shock-absorbing portions 5 along the first direction D1 and along the second direction D2 adjacently face, along the first direction D1 and along the second direction D2, the side and top inner faces of the packing box Bp, and thus the packing member 1 obtains from the pair of second shock-absorbing portions 5 a shock-absorbing effect along the first direction D1 and along the second direction D2.

In the packing member 1 as a sheet material in a flat state, the third shock-absorbing portion 6 is arranged between the pair of second shock-absorbing portions 5, between two fold lines 5f extending in the direction orthogonal to the fold lines 4f. The third shock-absorbing portion 6 is connected between the pair of second shock-absorbing portions 5, and is formed substantially in a V-shape as seen from the second direction D2 (upward) facing the base portion 2.

Specifically, the third shock-absorbing portion 6 is formed by being bent along the fold lines 5f provided along the circumferential edges of the pair of second shock-absorbing portions 5, substantially in a V-shape along the third direction D3 (the longitudinal direction of the packed article Pr). In other words, the third shock-absorbing portion 6 is formed in a shape convex to a side such that a part around the middle of the third shock-absorbing portion 6 along the first direction D1 is away from the packed article Pr, outside it along the second direction D2. As shown in Fig. 1, the vertex of the V-shape of the third shock-absorbing portion 6 faces the inner face of the packing box Bp along the third direction D3 (sidewise).

The third shock-absorbing portion 6 is arranged adjacently outside the housing space S with respect to the base portion 2, and faces the top inner face of the packing box Bp along the second direction D2 (top-bottom direction). In the packing member 1 in the assembled state shown in Figs. 1 and 2, the third shock-absorbing portion 6 is in the shape of a flat plate extending along the second direction D2 (top-bottom direction) and substantially along the third direction D3 (the longitudinal direction of the packed article Pr).

The third shock-absorbing portion 6 is arranged to face the base portion 2, and extends upward along a direction normal to one face of the base portion 2 (along the second direction D2). The tip edge of the plate-shaped third shock-absorbing portion 6 along the second direction D2 faces the top inner face of the packing box Bp along the second direction D2, and thus the packing member 1 obtains from the third shock-absorbing portion 6 a shock-absorbing effect along the second direction D2.

The base portion 2 has a pair of through holes 21. The pair of through holes 21 are arranged away from each other along the first direction D1. The through hole 21 is, as seen in a plan view, in a rectangular shape extending along the first direction D1.

In the packing member 1 as a sheet material in a flat state, the pair of through holes 21 are arranged side by side along the extension line of the fold lines 4f. In the packing member 1 in the assembled state shown in Figs. 2, 4, and 5, the pair of through holes 21 respectively face parts of the pair of second shock-absorbing portions 5 along the second direction D2 (top-bottom direction), and are respectively arranged below the pair of second shock-absorbing portions 5. The pair of through holes 21 extending in a rectangular shape are parallel to the pair of second shock-absorbing portions 5, which are flat-plate-shaped.

The pair of second shock-absorbing portions 5 have a pair of projections 51. The pair of projections 51 are respectively provided on the pair of second shock-absorbing portions 5, which are away from each other across the third shock-absorbing portion 6 along the first direction D1. The pair of second shock-absorbing portions 5 are in a rectangular shape extending along the first direction D1.

In the packing member 1 as a sheet material in a flat state, the pair of projections 51 are arranged adjacent to the fold lines 5f. In the packing member 1 in the assembled state shown in Figs. 2, 4, and 5, the pair of projections 51 face the base portion 2 along the second direction D2 (top-bottom direction), and are arranged above the base portion 2. Specifically the pair of projections 51 face the pair of through holes 21 along the second direction D2 (top-bottom direction), and are arranged above the pair of through holes 21. In the packing member 1 in the assembled state, the pair of projections 51 are respectively inserted in the pair of through holes 21.

With the above configuration, the packing member 1, in the three-dimensional shape composed of the pair of first shock-absorbing portions 4, the pair of second shock-absorbing portions 5, and the third shock-absorbing portion 6, permits the projections 51 on the pair of second shock-absorbing portions 5 to be inserted respectively in the pair of through holes 21 in the base portion 2. Inserting the projections 51 in the through holes 21 helps prevent the pair of second shock-absorbing portions 5 from fanning out apart from each other outward to opposite sides along the first direction D1. That is, the pair of second shock-absorbing portions 5 can be prevented from being displaced relative to the base portion 2. With the displacement of different parts prevented, it is possible to firmly maintain the three-dimensional shape.

The pair of through holes 21 are respectively arranged adjacent to the pair of side wall portions 3. In other words, the pair of through holes 21 extend respectively from the boundaries (fold lines 2f) between the pair of side wall portions 3 and the base portion 2 into the base portion 2 along the first direction D1.

With the above configuration, with the elasticity of the material such as cardboard, if the pair of second shock-absorbing portions 5 tend to fan out apart from each other outward to opposite sides along the first direction D1, the outer edges of the projections 51 along the first direction D1 are caught on the side wall portions 3. Thus prevents the fanning-out of the pair of second shock-absorbing portions 5 outward to opposite sides along the first direction D1. This helps enhance the effect of preventing the displacement of the pair of second shock-absorbing portions 5.

The third shock-absorbing portion 6 has engagement segments 61. The engagement segments 61 are provided at the vertex of the V-shape of the third shock-absorbing portion 6 formed substantially in a V-shape as seen from the second direction D2 (top-bottom direction). Two of the engagement segments 61 are arranged so as to substantially face each other along the first direction D1. The engagement segment 61 is in the shape of a hook extending downward along the second direction D2.

In the packing member 1 in the assembled state shown in Figs. 2 and 4, the engagement segments 61 are located outside a side edge of the base portion 2 to which the side wall portions 3 are not connected. In other words, the engagement segments 61 are arranged outside the side edge of the base portion 2 located outside the packed article Pr along the third direction D3. The engagement segments 61 extend toward the side of the base portion 2 facing the housing space S. In other words, the engagement segments 61 extend downward along the second direction D2 (top-bottom direction) beyond the base portion 2. The engagement segments 61 engage with the side edge of the base portion 2.

With the above configuration, the engagement segments 61, in the shape of a hook, of the third shock-absorbing portion 6 are caught on the side edge of the base portion 2. This prevents the third shock-absorbing portion 6 from being displaced upward along the second direction D2. This helps enhance the effect of preventing the displacement of the third shock-absorbing portion 6.

The packing member 1 includes a fourth shock-absorbing portion 7. The fourth shock-absorbing portion 7 is disposed outside the housing space S in the packing member 1 with respect to the third direction D3 (the longitudinal direction of the packed article Pr). In the packing member 1 as a sheet material in a flat state, the fourth shock-absorbing portion 7 is disposed adjacent to the base portion 2, between the pair of side wall portions 3, between the two fold lines 2f respectively extending parallel to the two fold lines 3f1. The fourth shock-absorbing portion 7 are connected between the pair of side wall portions 3 to extend along the third direction D3 and is formed substantially in a V-shape as seen from the third direction D3.

Specifically, the fourth shock-absorbing portion 7 is formed by being bent downward along the second direction D2 (top-bottom direction) into substantially a V-shape along two fold lines 3f2 respectively provided along the circumferential edges of the pair of side wall portions 3. In other words, the fourth shock-absorbing portion 7 is formed in a shape of which a part around the middle along the first direction D1 is convex downward. As shown in Figs. 1 and 4. the vertex of the V-shape of the fourth shock-absorbing portion 7 faces the inner floor face of the packing box Bp.

In the packing member 1 as a sheet material, the fourth shock-absorbing portion 7 is adjacent to the base portion 2. Along the boundary between the fourth shock-absorbing portion 7 and the base portion 2, a cut line 7C is formed that extends rectilinearly along the first direction D1 and that penetrates the sheet material in its thickness direction. The cut line 7C extends up to the boundaries of the fourth shock-absorbing portion 7 with the pair of side wall portions 3, respectively.

The fourth shock-absorbing portion 7 also has a folded portion 71. In the packing member 1 as a sheet material in a flat state, the folded portion 71 is arranged outside (in Fig. 3, below) an end part of the outer edge of the pair of side wall portions 3 along the third direction D3, at the side away from the base portion 2. The folded portion 71 is folded toward the base portion 2 along a fold line 7f extending along the extension lines of the end part of the outer edge of the pair of side wall portions 3 along the third direction D3 so as to be folded in two layers along the second direction D2 (top-bottom direction).

The fourth shock-absorbing portion 7 is arranged adjacently outside the housing space S with respect to the base portion 2, and faces a side inner face of the packing box Bp along the third direction D3 (the longitudinal direction of the packed article Pr). In the packing member 1 in the assembled state shown in Figs. 1, 2, 4, and 5, the fourth shock-absorbing portion 7 is in the shape of a flat plate extending along the second direction D2 (top-bottom direction) and along the third direction D3 (the longitudinal direction of the packed article Pr).

As described above, the tip edge of the plate-shaped fourth shock-absorbing portion 7 along the third direction D3 adjacently faces the side inner face of the packing box Bp along the third direction D3, and thus the packing member 1 obtains from the fourth shock-absorbing portion 7 a shock-absorbing effect along the third direction D3.

While an embodiment of the present disclosure has been described, it is not meant to limit the scope of the present disclosure.

## Claims

1. A packing member (1) formed by bending a single sheet material so as to have a housing space (S), comprising:
a base portion (2) in a rectangular shape;
a pair of side wall portions (3) formed by being bent substantially perpendicularly from a circumferential edge of the base portion (2), the pair of side wall portions (3) being arranged to face each other along a first direction (D1) across the housing space (S);
a pair of first shock-absorbing portions (4) formed by being bent substantially perpendicularly from circumferential edges of the pair of side wall portions (3), the pair of first shock-absorbing portions (4) extending outward of the side wall portions (3) along the first direction (D1);
a pair of second shock-absorbing portions (5) formed by being bent substantially perpendicularly from circumferential edges of the pair of first shock-absorbing portions (4), the pair of second shock-absorbing portions (5) extending substantially perpendicularly to the side wall portions (3) along the first direction (D1) and along a direction toward the base portion (2); and
a third shock-absorbing portion (6) connected between the pair of second shock-absorbing portions (5) and formed substantially in a V-shape as seen from a second direction (D2) facing the base portion (2), the third shock-absorbing portion (6) being arranged adjacently outside the housing space (S) with respect to the base portion (2),
wherein
the base portion (2) has a pair of through holes (21) arranged away from each other along the first direction (D1), and
the pair of second shock-absorbing portions (5) have a pair of projections (51) inserted in the pair of through holes (21).

2. The packing member (1) according to claim 1, wherein
the pair of through holes (21) respectively extend from boundaries between the pair of side wall portions (3) and the base portion (2) into the base portion (2).

3. The packing member (1) according to claim 1, further comprising:
the third shock-absorbing portion (6) includes, outside a side edge of the base portion (2) to which the side wall portions (3) are not connected, engagement segments (61) extending toward a side of the base portion (2) facing housing space (S), the engagement segments (61) engaging with said side edge of the base portion (2).

4. The packing member (1) according to claim 1, further comprising:
a fourth shock-absorbing portion (7) arranged outside the housing space (S) with respect to a third direction (D3) orthogonal the first and second direction (D2), the fourth shock-absorbing portion (7) extending along the third direction (D3) and being formed substantially in a V-shape as seen from the third direction (D3).
